# EUROPEAN PATENT APPLICATION

(11) **EP 1 204 081 A2**
(43) Date of publication of application: **08.05.2002**
(21) Application number: 01125426.5
(22) Date of filing: 31.10.2001
(51) Int. Cl.: G07F 19/00, G07G 1/12

(54) **Charge collection method**

(30) Priority: 02.11.2000 JP 2000335340
(71) Applicant: YOZAN INC., Tokyo 155 (JP)
(72) Inventor: Takatori, Sunao, Setagaya-ku, Tokyo (JP)
(74) Representative: von Hellfeld, Axel, Dr. Dipl.-Phys.

(57) **Abstract**

A method of efficiently collecting a charge for the payment of money for an article of merchandise that are purchased is used in a charge collection system having a contactless storage medium in an article tag which has recorded product information therein, a contactless storage medium in a customer terminal which has recorded customer ID information therein, and a charging device in a store. The method comprises the steps of reading the product information from the contactless storage medium in the article tag into the charging device (step 71), calculating a total amount of money with the charging device based on the read product information (step 72), settling the payment of the calculated total amount of money with the charging device by receiving corresponding cash or reading the customer ID information from the contactless storage medium in the customer terminal (steps 74 - 78), and recording information of the settled payment in the contactless storage medium in the article tag (steps 79, 80).

## Description

### BACKGROUND OF THE INVENTION

### 1. Field of the Invention:

The present invention relates to a method of collecting charges for the payment of money for an article or articles of merchandise that are purchased, and more particularly to a method of collecting charges at retail stores such as supermarkets, specialty stores, etc.

### 2. Description of the Related Art:

When a customer buys an article or articles at a retail store such as a supermarket, specialty store, or the like, it is customary for the customer to present the article or articles at a cash register counter, and for the cashier to enter the amount of money for the article or each of the articles via the cash register or a bar-code reader. Then, the total amount of money is indicated to the customer for collecting the payment.

The conventional payment collecting process is burdensome on the cashier as it needs to enter monetary information by reading a bar code from each of the purchased goods, and requires an appropriate assignment of clerical workers at necessary cash register counters. It has been a time-consuming task for the cashier to calculate the total amount of money for purchased goods because the bar-code reader may have difficulty in reading some bar codes that are applied to three-dimensional surfaces and also because the cashier, if not skilled enough, may not quickly process purchased articles for the bar-code reader to read the bar codes properly. These drawbacks possibly end up with long lines of customers waiting at cash register counters in stores especially in the late afternoon.

Also, more and more customers are concerned with the safety of goods available for sale in stores in recent years, and are making demands for detailed information of products which they are going to purchase. Such detailed information includes the date of manufacture, information about ingredients and additives and the place of origin, the name of the manufacturer, the date of delivery to the store, etc. Some items of such product information have heretofore been printed on article packages at the time when they are manufactured. However, other items of product information that occur after the manufacture of products, such as the date of delivery to the store, cannot be printed on packages at the time of manufacture.

Further, sellers such as retail stores, supermarkets, etc. do not usually recognize buying trends of customers from customer information including age, sex, family, a history of purchased articles, etc. It has been customary for the sellers to advertise their merchandise through mass communications media such as newspaper advertisements, leaflets, etc.

### SUMMARY OF THE INVENTION

It is therefore an object of the present invention to provide a method of efficiently collecting charges for the payment of money for an article or articles of merchandise that are purchased.

In order to achieve the above object, there is provided in accordance with the present invention a method of collecting a charge for the payment of money for an article of merchandise that are purchased, in a charge collecting system having a contactless storage medium in an article tag which has recorded product information therein, a contactless storage medium in a customer terminal which has recorded customer ID information therein, and a charging device in a store, the method comprising the steps of reading the product information from the contactless storage medium in the article tag into the charging device, calculating a total amount of money with the charging device based on the read product information, settling the payment of the calculated total amount of money with the charging device by receiving corresponding cash or reading the customer ID information from the contactless storage medium in the customer terminal, and recording information on the settled payment in the contactless storage medium in the article tag. Preferably, the customer terminal includes means for reading the product information recorded in the contactless storage medium in the article tag. Preferably, the product information comprises at least one item selected from the group consisting of the ID of the article, the name of the article, the desired retail price recommended by the manufacturer of the article, the actual sale price, the date of manufacture, the date by which the article, if it is food, should be consumed, ingredients and additives information, the name of the manufacturer, the name of the factory, and the date of delivery to the store.

The method preferably further comprises the steps of analyzing sales data including the product information of an article which has been settled and the customer ID information of the customer who has purchased the article, and producing advertisement information for the customer based on the analyzed sales data.

Each of the contactless storage mediums comprises an IC chip as an information storage medium for contactless communication with an external device. Insofar as the contactless storage mediums are kept out of contact with the external device, they may communicate with the external device with radio waves of any wavelengths and at an binary distances therebetween. The contactless storage mediums include those which obtain operating electric power by way of electromagnetic induction from the radio wave received from a reader/writer that is used to read information from the contactless storage mediums, and which exchange data with the reader/writer using radio waves. The contactless storage mediums also include those which have an antenna, e.g., an antenna coil, for transmitting and receiving radio waves, together with other members. The contactless storage mediums further include storage mediums of the on-chip coil type which incorporate an antenna coil to meet demands for smaller components and more functions.

The contactless storage medium in the customer terminal stores customer ID information recorded therein. The customer ID information comprises information relative to the customer which can be recognized by the store. The customer ID information represents, for example, the ID number of a credit card, the ID number of a cash card known as a debit card, an ID number assigned by the store, the address, the name, age, sex, e-mail address, portable telephone number, home telephone number, etc. However, the customer ID information may be any information that can be used for identifying the customer in settling charges for the payment for an article or articles. If a prepaid system is employed in which a certain amount of money is deposited in advance at the store and automatically applied to settle a payment each time an article is purchased, then the customer ID information may be replaced with a prepaid amount of money that is available for payments.

The customer terminal may comprise any of various terminals capable of transmitting and receiving sound, image, and text data, including a portable telephone set, a PHS (personal handyphone system) terminal, a portable information terminal, etc.

The contactless storage medium in the article tag stores product information recorded therein. The product information comprises information representing the article ID, the article name, the desired retail price recommended by the manufacturer, the actual sale price, the date of manufacture, the date by which the article, if it is food, should be consumed, ingredients and additives information, the name of the manufacturer, the name of the factory, the date of delivery to the store, etc. In other embodiment, the contactless storage medium in the article tag may store the article ID only, and the charging device may store other items of information including the article name, the prices, etc.

The article which has been settled refers to an article that has been paid for by the customer with cash or customer ID information.

Analyzing the sales data refers to analyzing the sale of each article and the sale in each time zone, analyzing the sales based on customer's age, sex, and family profile from the customer ID information of customers who have purchased articles, and analyzing features of histories of purchases for each customers.

The advertisement information produced for the respective customer based on the analyzed sales data may be given as appropriate advertisement information to the customer. The appropriate advertisement information represents an advertisement for recommending consumable goods at such times that previously purchased similar consumable goods are expected to be used up, and an advertisement for recommending foods at such times that previously purchased similar foods are expected to be used up, based on the history of purchased articles. For example, an advertisement is sent once in every two weeks to a customer who tends to buy waste bags once in every two weeks, and an advertisement is sent once in every three weeks to a customer who tends to buy curry powder once in every three weeks. Based on segments such as different customer's ages, sexes, and families obtained from the customer ID information, an advertisement for a certain customer may be prepared to recommend good-seller articles from buying trends of other customers in the same segment. The advertisement information is generated by a computer such as a host computer at the headquarters of retail stores, for example, or the charging device, and sent as e-mail to the customer's terminal. Alternatively, the advertisement information may be generated by a computer such as a host computer at the headquarters of retail stores, for example, or the charging device, and, when the contactless storage medium in the customer terminal is brought closely to an product information reader in the store, the product information reader may recognize the customer ID information, and display the advertisement information for the customer.

With the above method of collecting charges using the contactless storage mediums, retail stores such as supermarkets, specialty stores, etc. are able to provide product information to customers, and speed up the settlement of charges for purchased articles at cash register counters. Therefore it will not be necessary for the customers to wait in line for a long period of time. Furthermore, retail stores such as supermarkets, specialty stores, etc. are able to produce advertisements effective to promote sales for respective customers based on histories of purchased articles which have been recorded when charges for the payment for the purchased articles are collected from the customers.

### BRIEF DESCRIPTION OF THE DRAWINGS

FIG. 1 is a block diagram of a system for carrying out a method of collecting a charge using a contactless storage medium according to the present invention;
FIG. 2 is a flowchart of a sequence for registering customer ID information in a contactless storage medium in a customer terminal according to an embodiment of the present invention;
FIG. 3 is a flowchart of a sequence for registering product information in a contactless storage medium in an article tag according to an embodiment of the present invention;
FIG. 4 is a flowchart of a sequence for acquiring product information when a customer purchases an article according to an embodiment of the present invention;
FIG. 5 is a flowchart of a sequence for purchasing articles according to an embodiment of the present invention; and
FIG. 6 is a flowchart of a sequence for receiving sales data according to an embodiment of the present invention.

### DETAILED DESCRIPTION OF THE PREFERRED EMBODIMENTS

The present invention provides a charge collection method which is characterized as follows: A contactless integrated circuit (label tag IC, hereinafter referred to as a contactless storage medium in an article tag) having a readable/writable volatile storage means and a transmit-ter/receiver for transmitting information to and receiving information from the storage means is applied to an article for sale at a store. A customer has a label tag IC (hereinafter referred to as a contactless storage medium in a customer terminal) which has recorded an ID number that has been registered for the store. When an article to which the contactless storage medium in the article tag and the contactless storage medium in the customer terminal are brought closely to a charging device in the store, a transmitting/receiving means in the charging device reads information stored in the contactless storage medium in the article tag and the contactless storage medium in the customer terminal, and the charging device automatically calculates a total amount of money for the purchased articles.

The information recorded in the contactless storage medium in the article tag may include product information required for the customer to choose the article, e.g., the date of production (manufacture) of the article, food ingredients and additives, the name of the factory where the article was manufactured, the manufacturer, the date of delivery to the store, the date of manufacture, the date by which the article, if it is food, should be consumed, etc. A reader may be installed in the store for the customer to confirm the recorded information when the customer buys articles. The contactless storage medium in the customer terminal may be applied to an electronic device such as a portable telephone set that is owned by the customer, and the electronic device may have a means for receiving the information from the contactless storage medium in the article tag. When the customer buys the article, the customer may confirm the price of the article and information useful for the purchase of the article, with the electronic device.

The charging device has a storage means which has recorded therein information with respect to a charging method for each customer ID. When the charging device reads information required to settle a payment, which represents the ID numbers of purchased articles, the names of the articles, the prices of the articles, etc., from the contactless storage medium in the article tag at the time the contactless storage medium in the article tag comes closely to the charging device, a processor in the charging device calculates a total amount of money for the purchased articles. If the stores provide discounts when a plurality of articles are purchased, then the processor also processes such discounts.

When the processor calculates a total amount of money, the calculated total amount of money is displayed, together with a list of purchased articles, on a display means in the charging device. If the customer agrees to pay the displayed total amount of money, then the customer inserts bank notes or coins into a bank note or coin insertion slot in the charging device, or brings the contactless storage medium in the customer terminal closely to the charging device. Conversely, if the customer does not agree to pay the displayed total amount of money, then the customer may return some of the purchased articles into a return slot. A transmitter/receiver disposed near the return slot reads the IDs of the returned articles, and corrects the list of purchased articles and the total amount of money to be paid.

When bank notes or coins are inserted into the bank note or coin insertion slot in the charging device, if the total amount of money represented by the inserted bank notes or coins exceeds the total amount of money for the purchased articles, then the charging device returns the difference from a return slot, and records information indicating that the payment has been done in the recording medium of the contactless storage medium in the article tag. The charging device then opens its exit door.

If the customer brings the contactless storage medium in the customer terminal closely to the charging device, the charging device reads the customer ID from the contactless storage medium in the customer terminal, and charges the customer according to the charting method corresponding to the customer ID which has been recorded in the charging device. If the customer has recorded a plurality of charging methods, then the charging device may display those charging methods on the display means for the customer to select one of the displayed charging methods.

When the process of normally charging the customer is completed, the charging device records information indicating that the payment has been made in the recording medium of the contactless storage medium in the article tag, and then opens the exit door. The store has an alarm device positioned near its exit. At the time the customer leaves the store by waking out of the exit, the alarm device reads the information about the payment from the contactless storage medium in the article tag. If the alarm device detects the passage of any article whose payment has not been recorded, then the alarm device may produce an alarm. The alarm device is effective for preventing shoplifting.

The charging device is connected to a host computer via a dedicated circuit, a telephone circuit, or a wireless communication circuit, and can function as a POS terminal.

The host computer manages various items of information representing the sale of each article, sales in each time zone, the buying habits, and customer's ages, sexes, and families, and produces basic reference information useful for store management. The host computer also manages a buying history of each customer ID, produces a leaflet for each customer ID, and sends the leaflet via direct mail or electronic mail to each customer. The host computer is connected to a display means installed at the store. When a customer brings the contactless storage medium in the customer terminal closely to the display means, the host computer controls the display means to display a list of recommended articles of the day for the customer. The host computer thus arranged and connected makes it possible to manage the store based on past sales data and to advertise articles in a manner to suit individual customers for effectively running the store.

### Embodiment 1: Charge collecting system using contactless storage medium

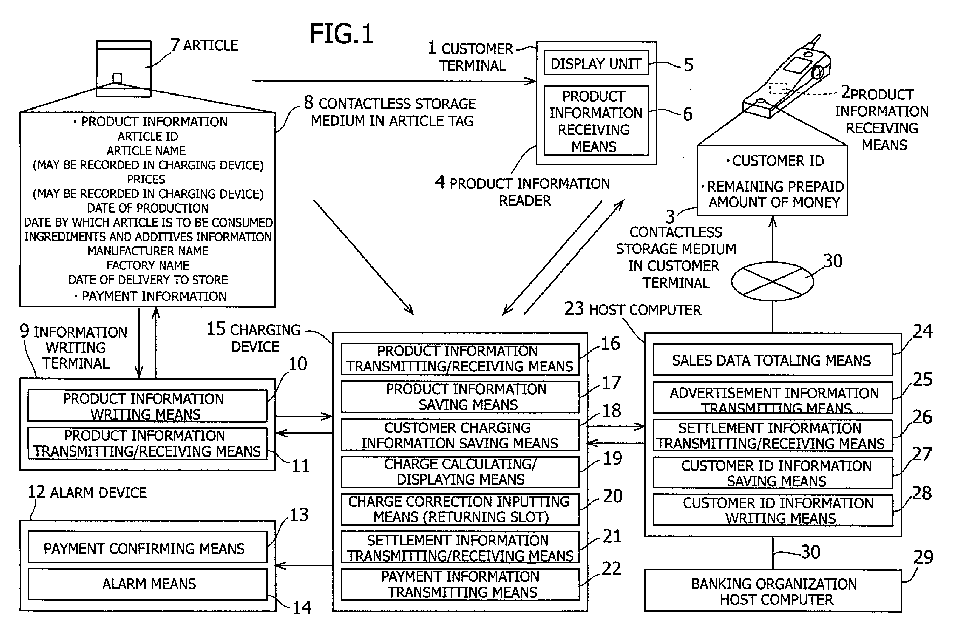

FIG. 1 shows in a block diagram a system for carrying out a method of collecting a charge using a contactless storage medium according to the present invention. As shown in FIG. 1, the charge collection system comprises a customer terminal 1 including an product information receiving means 2 and a contactless storage medium 3 on the customer terminal, an product information reader 4, a contactless storage medium 8 on an article tag that is applied as a seal to an article 7, a charging device 15, an information writing terminal 9 for recording product information in the contactless storage medium 8 on the article tag, an alarm device 12, and a host computer 23 connected to the customer terminal 1 and the charging device 15 by electric communication circuits.

### Embodiment 2: Sequence for registering customer ID information in the contactless storage medium in the customer terminal

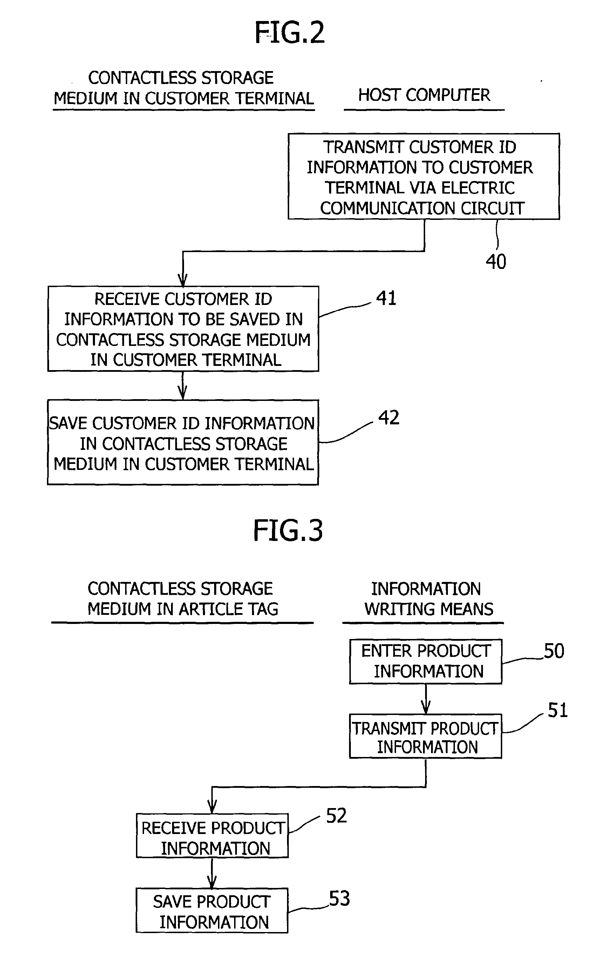

FIG. 2 shows a sequence for registering customer ID information in the contactless storage medium in the customer terminal according to one embodiment of the present invention. Customer ID information is obtained from a filled application form, on an Internet web page, or through telephone for the charge collecting method. The customer ID information includes, for example, the ID number of a credit card, the ID number of a cash card known as a debit card, an ID number assigned by the store, the address, the name, age, sex, e-mail address, portable telephone number, home telephone number, etc. However, the customer ID information may be any information used for identifying the customer in settling charges for an article or articles. The customer ID information obtained from the customer is transmitted from the host computer 23 via the electric communication circuit to the contactless storage medium 3 on the customer terminal 1 (step 40). The customer terminal 1 receives the customer ID information, and saves the customer ID information in the contactless storage medium 3 on the customer terminal (steps 41, 42). The customer ID information may be recorded in the contactless storage medium 3 on the customer terminal using a writing terminal (not shown) without transmission over the electric communication circuit. The customer ID information which has been recorded in the contactless storage medium 3 on the customer terminal is protected by a security function against unauthorized modification by the customer and third parties.

### Embodiment 3: Sequence for registering product information in the contactless storage medium in the article tag

FIG. 3 shows a sequence for registering product information in the contactless storage medium in the article tag. Product information which a clerk at the store has written in the information writing terminal 9 is entered into an product information writing means 10 in the information writing terminal 9 (step 50). Alternatively, product information stored in an product information storage means 17 in the charging device 15 may be received via an product information transmitting/receiving means 16 in the charging device 15 and an product information transmitting/receiving means 11 in the information writing terminal 9. Then, the product information is transmitted to the contactless storage medium 8 in the article tag by the product information transmitting/receiving means 11 (step 51). The contactless storage medium 8 on the article tag receives the transmitted product information, and stores the product information (steps 52, 53). The product information may include the article ID, the article name, the desired retail price recommended by the manufacturer, the actual sale price, the date of manufacture, the date by which the article, if it is food, should be consumed, ingredients and additives information, the name of the manufacturer, the name of the factory, the date of delivery to the store, etc.

### Embodiment 4: Sequence for acquiring product information when a customer purchases an article

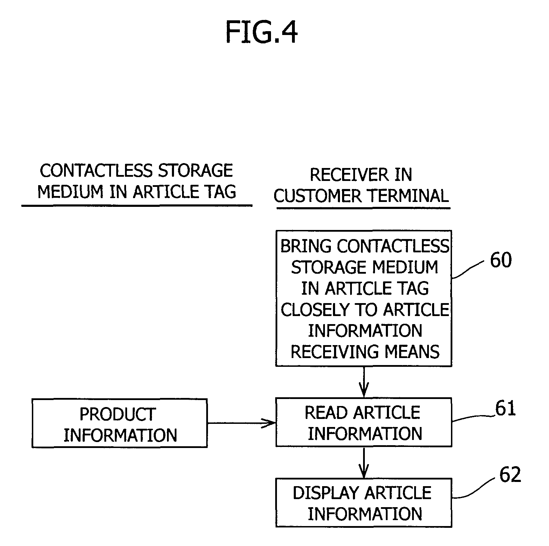

FIG. 4 shows a sequence for acquiring product information when a customer purchases an article according to an other embodiment of the present invention. In order for the customer to read product information recorded in the contactless storage medium 8 in the article tag applied to the article 7, the customer brings the contactless storage medium 8 in the article tag closely to the product information receiving means 2 of the customer terminal 1 or an product information receiving means 6 in the product information reader 4 in the store (step 60). The product information receiving means 2, 6 reads the product information from the contactless storage medium 8 in the article tag, and display the product information on their respective display units 5 (steps 61, 62).

### Embodiment 5: Sequence for purchasing articles

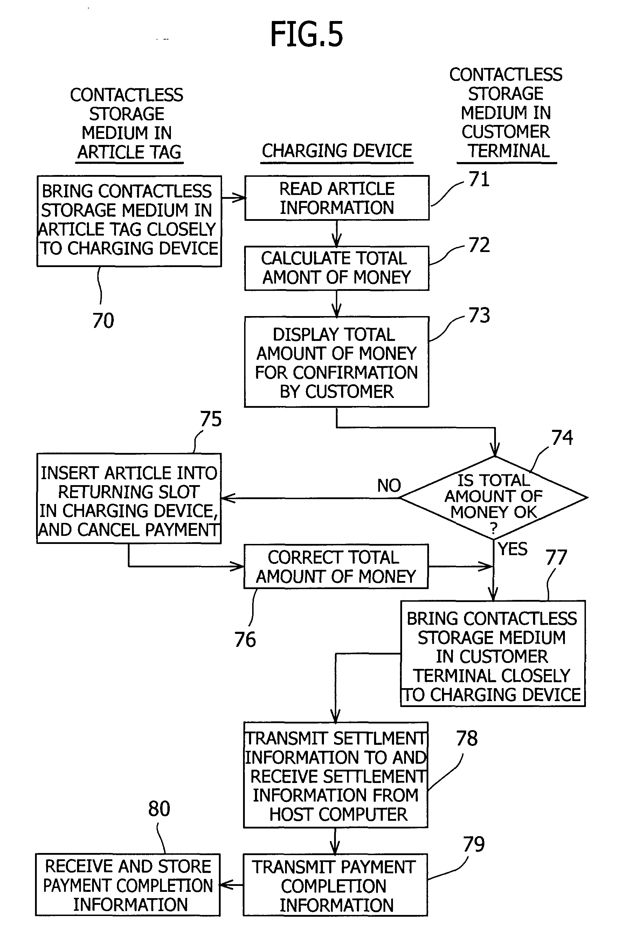

FIG. 5 shows a sequence for purchasing articles according to yet another embodiment of the present invention. The customer brings the contactless storage medium 8 in the article tag closely to the charging device 15 (step 70). The product information transmitting/receiving means 16 in the charging device 15 reads the product information from the contactless storage medium 8 on the article tag (step 71). If there are a plurality of articles which the customer is planning to buy, then the customer repeats steps 70, 71. A charge calculating/displaying means 19 in the charging device 15 calculates a total amount of money to be paid for the articles using actual sale prices contained in the product information (step 72). The charge calculating/displaying means 19 then displays the calculated total amount of money (step 73).

The customer confirms the displayed amount of money. If the customer recognizes that the displayed amount of money is acceptable, then the customer brings the contactless storage medium 3 on the customer terminal closely to the charging device 15 (step 77). The charging device 15 reads user ID information from the contactless storage medium 3 on the customer terminal, confirms a settling method which may represent settling the payment with a card such as a credit card or a cash card or settling the payment with the remainder of a prepaid amount of money, and saves the settling method in a customer charging information saving means 18. The charging device 15 finishes the settlement of the payment for each article in cooperation with a settlement information transmitting/receiving means 26 and a banking organization host computer 29 (step 78). At this time, the customer may pay cash for the articles without bringing the customer terminal 1 closely to the charging device 15. If the customer has no credit outstanding balance or no cash deposit as indicated by the banking organization host computer 29 and is unable to settle payments, then the customer may not be able to buy articles. When the customer has not have enough credit outstanding balance or cash deposit, the customer returns some or all of the articles 7 which the customer is planning to buy to a charge correction inputting means (returning slot) 20 in the charging device 15 to subtract a corresponding amount of money from the total amount of money, thus correcting the total amount of money (steps 75, 76). After the payment of the total amount of money for the articles is finished, a payment information transmitting means 22 in the charging device 15 records information indicative of the completion of the payment on the contactless storage medium 8 on the article tag of each purchased article (steps 79, 80). With the completion of the payment being thus recorded, the articles 7 purchased by the customer are not recognized by a payment confirming means 13 in the alarm device 12 at the exit of the store, and hence an alarm lamp of the alarm means 14 is not turned on. However, when a shoplifter with a shoplifted article which has not been paid for walks near the alarm device 12, the payment confirming means 13 recognizes unpaid information in the contactless storage medium 8 on the article tag of the shoplifted article, and turns on the alarm lamp to alert clerks in the store.

### Embodiment 7: Sequence for receiving and analyzing sales data

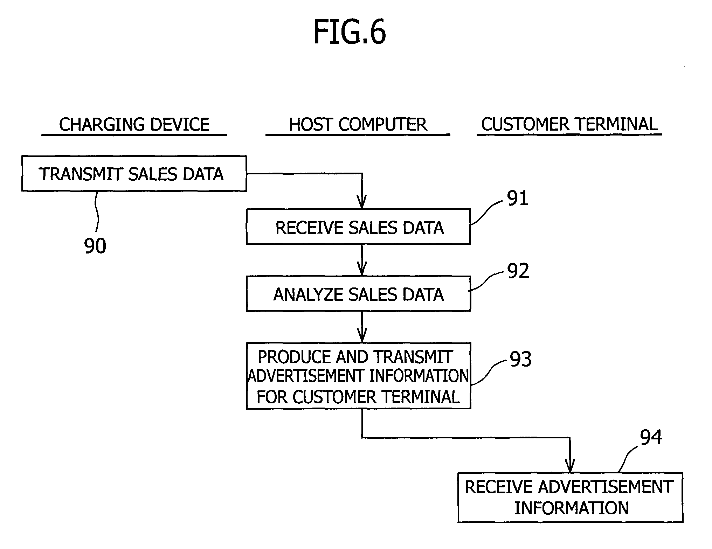

FIG. 6 shows a sequence for receiving sales data according to another embodiment of the present invention. When an article payment is settled, the charging device 15 transmits sales data (step 90), and the host computer 23 receives sales data from the charging device 15 via the electric communication circuit (step 91). The operator of the host computer then analyzes the sales data with a dedicated program (step 92). Since the sales data is available for each customer, the operator of the host computer may produce information about recommended articles based on the sales history of each customer, and transmit the information about recommended articles to the customer terminal 1 at a registered e-mail address via the electric communication circuit such as the Internet (step 93). The customer receives the transmitted advertisement information and can browse through the received advertisement information at any desired time (step 94).

As described above, the present invention provides a method of efficiently collecting charges for an article or articles of merchandise that are purchased. With the method according to the present invention, customers do not have to wait in line for a long period of time at cash registers at retail stores such as supermarkets, specialty stores, etc. The method according to the present invention allows customers to obtain detailed product information with ease, and also allows retail stores such as supermarkets, specialty stores, etc. to produce appropriate advertisements effective to promote sales for respective customers based on histories of purchases which have been recorded when charges for the purchased articles are collected from the customers.

## Claims

1. A method of collecting a charge for the payment of money for an article of merchandise that is purchased, in a charge collecting system having a contactless storage medium in an article tag which has recorded product information therein, a contactless storage medium in a customer terminal which has recorded customer ID information therein, and a charging device in a store, said method comprising the steps of:
reading the product information from the contactless storage medium in the article tag into the charging device;
calculating a total amount of money with the charging device based on the read product information;
settling the payment of the calculated total amount of money with the charging device by receiving corresponding cash or reading the customer ID information from the contactless storage medium in the customer terminal; and
recording information of the settled payment in the contactless storage medium in the article tag.

2. A method according to claim 1, wherein said customer terminal includes means for reading the product information recorded in the contactless storage medium in the article tag.

3. A method according to claim 1, wherein said product information comprises at least one item selected from the group consisting of an ID of the article, a name of the article, a desired retail price of the article recommended by a manufacturer, an actual sale price, a date of manufacture, a date by which the article, if it is food, should be consumed, ingredients and additives information, a name of the manufacturer, a name of the factory, and a date of delivery to the store.

4. A method according to claims 1, further comprising the steps of:
analyzing sales data including the product information of an article which has been settled and the customer ID information of the customer who has purchased the article; and
producing advertisement information for the customer based on the analyzed sales data.
